# EUROPÄISCHE PATENTSCHRIFT

(11) **EP 1 362 805 B1**
(45) Veröffentlichungstag und Bekanntmachung des Hinweises auf die Patenterteilung: **31.08.2005**
(21) Anmeldenummer: 03008962.7
(22) Anmeldetag: 17.04.2003
(51) Int. Cl.: B65G 19/28, E21C 35/12

(54) **Rinnenschuss für einen Kettenkratzförderer**
Scraper conveyor trough section
Couloir pour un convoyeur à raclettes

(30) Priorität: 17.05.2002 DE 10222599
(43) Veröffentlichungstag der Anmeldung: 19.11.2003
(73) Patentinhaber: DBT GmbH, 44534 Lünen (DE)
(72) Erfinder: Vorsteher, Dirk, Dr., 33619 Bielefeld (DE); Merten, Gerhard, 44534 Lünen (DE); Fischer, Frank, 44534 Lünen (DE); Wirtz, Jörg, 45529 Hattingen (DE); Schmidt, Siegfried, 46242 Bottrop (DE); Broszat, Martin, 59349 Nordkirchen (DE); Hefferan, Alfred, Venetia, PA 15367-1055 (US); Cobley, John, Farnsfield, Nottinghamshire NG228EZ (GB); McAndrew, Alister, Belper, Derby DE56IJE (GB); Losbrodt, Olaf, 44623 Herne (DE)
(74) Vertreter: Althaus, Arndt

(56) Entgegenhaltungen:
- DE-A- 3 905 324
- DE-A- 4 006 183
- FR-A- 1 376 643
- GB-A- 2 095 195
- US-A- 3 617 092
- US-A- 4 643 296
- US-A- 5 700 061

## Beschreibung

Die Erfindung betrifft einen Rinnenschuß für untertägige Streb- und Streckenförderer, mit Untertrum und Obertrum zur Führung der Kratzer einer Kratzerkette, mit einer geschweißten Rahmenkonstruktion, die fest miteinander verbundene Seitenwangen aufweist, mit einem Förderboden und mit Rinnenschußverbindungsmitteln.

In untertägigen Gewinnungsanlagen wie z.B. untertägigen Bergbaubetrieben kommen Kettenkratzförderer großer Gesamtlängen zum Einsatz, die aus einzelnen endseitig zugfest miteinander verbundenen Rinnenschüssen zusammengesetzt sind. Die Verbindung der benachbarten und aneinander angeschlossenen Rinnenschüsse erfolgt z.B. über Knebeltaschen und Knebel, die eine gewisse Winkelbeweglichkeit in der Horizontalen und der Vertikalen der benachbarten Rinnenschüsse zulassen, so daß der Kettenkratzförderer Bodenunebenheiten im Liegenden ausgleichen kann und mit dem Fortschritt der Abbaufront mitbewegt werden kann. Sofern die Rinnenschüsse für Strebförderer eingesetzt werden, sind sie versatzseitig und/oder abbaustoßseitig mit Anbauteilen zur Führung z.B. eines Gewinnungshobels oder eines Walzenladers versehen und weisen Anschlußkonsolen für einen am Strebausbau widergelagerten Schreitbalken auf. Durch Verbesserungen der Gewinnungsleistung der Gewinnungsmaschinen und durch Steigerung der Streblängen auf mittlerweile bis zu 450m steigt die von den Förderern zu bewältigende Förderleistung ebenfalls an und moderne Streb- und Streckenförderer müssen Förderkapazitäten von wenigstens 2000 t/h (Tonnen/Stunde), bei Hochleistungsförderern auch von 5000 t/h bewältigen können. Mit steigender Förderkapazität nimmt der Verschleiß einzelner Rinnenschüsse zwangsläufig zu und es besteht im Markt ein Bedarf an Förderrinnen mit hoher Förderkapazität und langer Lebensdauer bei möglichst niedrigen Produktionskosten und niedrigem Gesamtgewicht der einzelnen Rinnenschüsse.

Moderne untertägige Streb- und Streckenförderer können anhand des Aufbaus der Rinnenschüsse in drei Gruppen eingeteilt werden. Die erste Gruppe beinhaltet Förderer mit vollständig gegossenen Rinnenschüssen. Der Vorteil derartiger Gußkonstruktionen liegt in ihrer hohen Reproduzierbarkeit, der hohen Belastbarkeit aufgrund des homogenen Aufbaus und der geringen Anfälligkeit gegenüber Montagefehlern. Nachteilig sind die hohen Materialkosten, die geringe Eignung, einzelne Zonen für höhere Belastungen oder längere Lebensdauer auszulegen sowie die fehlende Möglichkeit, Verschleißteile auszutauschen.

Die zweite Gruppe bilden sogenannte Hybridrinnen, die einerseits aus Gußteilen und andererseits aus Walzteilen bestehen. Eine derartige Hybridrinne zeigt beispielsweise die EP 525 926 B1. Hybridrinnen kommen mit einer geringen Anzahl von Schweißnähten aus, da z.B. die gesamte Konstruktion der Seitenwange einschließlich Seitenprofil zur Führung der Kratzer in den Trumen und Knebeltasche als Teil der Rinnenschußverbindungsmittel einstückig ausgebildet werden kann, während der Förderboden als eines der hauptbelasteten Teile an den gegossenen Seitenwangen angeschweißt wird. Ferner ist bei Hybridrinnen bekannt, die Rinnenschußverbindungsmittel und andere Anbauteile zum Rücken des Förderers oder zur Führung einer Gewinnungsmaschine nachträglich anzuschweißen (DE 39 05 324 A1).

Die dritte Gruppe von Rinnenschüssen, von der vorliegende Erfindung als gattungsgemäße Konstruktionen ausgeht, besteht vollständig oder annähernd vollständig aus einer Schweißkonstruktion, wobei zumindest die höher belasteten Bauteile wie Förderboden und/oder Seitenprofile aus Walzprofilen bestehen und hierdurch eine deutlich längere Lebensdauer und geringere Verschleißanfälligkeit aufweisen (DE 29 18 007 A1, DE-PS 974 612, DE 393 38 84 C 2 oder DE 400 61 83 C2). Der wesentliche Vorteil der geschweißten Rinnenschüsse liegt darin, daß durch die Auswahl unterschiedlicher Materialien und Herstellverfahren für die jeweiligen Teile der Schweißkonstruktion eine lange Lebensdauer der Rinnenschüsse erzielt werden können. Fehler innerhalb der Maßhaltigkeit einzelner Teile der Schweißkonstruktion können beim Montagevorgang, d.h. beim Fügen der Schweißverbindungen, ausgeglichen werden. Als wesentliche Nachteile gelten bisher die hohen, personalabhängigen Fertigungskosten wegen der Vielzahl von vorzunehmenden Montageschritten und Schweißverbindungen, die Gefahr von Fehlern oder Rissbildungen in den Schweißverbindungen und die hohen Werkzeugkosten für die zum Walzen der Profilteile benötigten Werkzeuge. Die Rinnenschüsse der dritten Gruppe können sich gleichwohl im Markt behaupten, da durch einen Austausch abgenutzter Teile zu vergleichsweise günstigen Kosten die volle Funktionsfähigkeit des Förderers wieder hergestellt werden kann. Als auszutauschende Teile kommt insbesondere der Obertrum in Betracht, der als Wechseltrog ausgebildet werden kann.

Aus der FR 1 376 643 ist ein gattungsgemäßer Rinnenschuß mit sigmaförmigen Seitenwangen bekannt, die über zwei im Abstand voneinander angeordnete Bleche zu einer Rahmenkonstruktion verschweißt sind. Der Boden- und der Deckschenkel der Seitenwangen weisen nach innen und begrenzen die Profilausnehmung zur Führung der Kratzerenden der mit der Kette gezogenen Kratzer. Der V-förmig nach innen abgewinkelte Zwischensteg weist am Scheitelpunkt des V einen nasenförmigen Vorsprung auf, an dem sich das untere der beiden Bleche unter Umständen geringfügig vor dem Verschweißen abstützen könnte. Die Rinnenschußverbindungsmittel könne im offenen V angeordnet und abgestützt werden.

Aufgabe der Erfindung ist es, einen Rinnenschuß zu schaffen, der sämtliche Vorteile einer Schweißkonstruktion bietet und gleichzeitig die Nachteile bekannter Rinnenschußkonstruktionen vermeidet, und der insbesondere aufgrund seiner konstruktiven Gestaltung kostengünstig, mit geringem Gesamtgewicht und mit weniger Montageschritten als ein gattungsgemäßer Rinnenschuß herstellbar ist.

Diese Aufgabe wird mit der in Anspruch 1 angegebenen Erfindung gelöst. Vorteilhafte Ausgestaltungen sind in den Unteransprüchen angegeben.

Bei dem erfindungsgemäßen Rinnenschuß bestehen die Seitenwangen aus spiegelverkehrt angeordneten, einstückigen Walzprofilen mit einer über die Rinnenschußlänge konstanten Profilform, wobei die Walzprofile nach außen abgewinkelt einen Bodenschenkel und einen Deckschenkel sowie einen diese verbindenden, aufragenden Zwischenschenkel umfassen, der mit einer Kröpfung versehen ist, an der innenseitig wenigstens eine Stufe zur Abstützung und Anschweißung wenigstens eines die Walzprofile zur Rahmenkonstruktion versteifenden Zwischenblechs ausgebildet ist. Erfindungsgemäß werden mithin die Seitenwangen aus einem im wesentlichen über die gesamte Rinnenschußhöhe aufragenden, annähernd U-förmigen Walzprofil mit unsymmetrischer Profilform gebildet. Die Profilform ist hierbei aufgrund der Kröpfung angepaßt, Funktions- und Anbauteile wenigstens teilweise formschlüssig aufzunehmen, so daß durch die spezielle Profilform des Walzprofils die erforderlichen Montageschritte für die Anbauteile erleichtert werden und das Anbringen der Schweißnaht durch die Profilform des Walzprofils begünstigt wird. Die Versteifung der Rahmenkonstruktion erfolgt etwa mittig zwischen Untertrum und Obertrum, jedoch mittels eines zusätzlichen, nicht den Förderboden bildenden Zwischenblechs. Der obere Zwischenschenkelabschnitt oberhalb der Kröpfung ist gegenüber dem unteren Zwischenschenkelabschnitt unterhalb der Kröpfung nach außen versetzt, so daß eine großflächige seitliche Abstützung des Förderbodens erzielt werden kann.

In bevorzugter Ausgestaltung ist hierbei der Zwischenschenkel des Walzprofils innenseitig mit einer zweiten Stufe zur Abstützung des Förderbodens versehen, wobei vorzugsweise die obere Deckfläche der Kröpfung die zweite Stufe bildet. Durch diese Maßnahmen werden der Förderboden und sämtliche Kräfte in Vertikalrichtung nicht mittels des Zwischenblechs, sondern mittels der Stufen innerhalb der Walzprofile abgestützt. In bevorzugter Ausgestaltung kann der obere Zwischenschenkelabschnitt gegenüber dem unteren Zwischenschenkelabschnitt unterhalb der Kröpfung um mehr als die Wandstärke der zwischenschenkelabschnitte nach außen versetzt sein. Der vorzugsweise als gerader Wandabschnitt zwischen Bodenschenkel und Kröpfung ausgeführte untere Zwischenschenkelabschnitt des Walzprofils kann unterhalb der Stufe mit seiner Innenseite vorzugsweise unmittelbar die Seitenwände des Untertrums bilden, ohne daß der untere Zwischenschenkelabschnitt an die Profilform der Kratzerenden der Kratzer angepasst ist. Der obere Zwischenschenkelabschnitt oberhalb der Stufe und/oder Kröpfung begrenzt vorzugsweise mit seiner Innenseite eine Aufnahme für einen als Wechseltrog ausgeführten Obertrum. Wenn die Seitenwände des Untertrums in das Walzprofil integriert sind, sinkt das Gesamtgewicht des Rinnenschuß erheblich. Da im Untertrum in der Regel kein Fördergut bzw. keine Kohle gefördert wird, hat diese Maßnahme für die Gesamtlebensdauer des Rinnenschuß keine nachteilige Wirkung. Wie an sich bekannt kann dann der Wechseltrog für den Obertrum aus zwei gewalzten, im wesentlichen L-förmig, gewinkelten oder T-förmigen und vorzugsweise an die Profilform der Kratzer angepaßten Seitenprofilen und einem mit diesen verschweißten Förderboden bestehen.

Eine vorteilhafte Profilform für das Walzprofil kennzeichnet sich dadurch, daß die Wanddicke des unteren Zwischenschenkelabschnitts im wesentlich gleich ist zu der des oberen Zwischenschenkelabschnitts und geringer ist als die Wanddicke des einstückig mit dem Zwischenschenkel verbundenen Bodenschenkels und/oder Deckschenkels. Besonders vorteilhaft ist, wenn das Walzprofil im Bereich der Kröpfung mit einer die Stufe/n verstärkenden Materialanhäufung versehen ist und/oder unmittelbar oberhalb der Kröpfung die schmalste Wandstärke aufweist, so daß sämtliche Kräfte vom Wechseltrog sicher in das Walzprofil eingeleitet werden können. Außerdem kann dann der Förderboden die Seitenprofile des Obertrums geringfügig überragen, so daß ausreichend Fläche zum Anbringen der Schweißnaht zwischen dem Förderboden des Wechseltroges und dessen Seitenprofilen vorhanden ist. Der Deckschenkel des Walzprofils kann insbesondere rechtwinklig zum oberen Zwischenschenkelabschnitt abgewinkelt sein und/oder an der Innenseite des oberen Zwischenschenkelabschnitts ist auf Höhe des Deckschenkels eine Rippe ausgebildet, die im Montagezustand die einzige Anlagefläche und seitliche Fixierung für den Wechseltrog bildet.

Besonders vorteilhaft ist, wenn der untere Zwischenschenkelabschnitt und der Bodenschenkel eine Einbuchtung zur formschlüssigen Abstützung und Aufnahme entsprechender Ausbuchtungen an den Rinnenschußverbindungsmitteln und/oder an einer Anschlußkonsole für den Schreitbalken bilden und begrenzen. Die formschlüssige Aufnahme und Einpassung der Rinnenschußverbindungsmittel und Anschlußkonsolen hat nicht nur fertigungstechnisch Vorteile, sondern nach deren Montieren und Einschweißen wird das Walzprofil oberhalb der Kröpfung zusätzlich abgestützt, so daß es ggf. auch höchste, von einer am Rinnenschuß geführten Gewinnungsmaschine ausgeübte Kräfte und Belastungen aufnehmen kann. Vorzugsweise ist der Zwischenschenkel an der Außenseite im Bereich der Kröpfung mit einer Schräge von 45°, 60° oder einem Zwischenwert versehen.

Für die Vereinfachung und Erleichterung der Montage des Rinnenschusses kann das Walzprofil an der Innenseite des unteren Zwischenschenkelabschnitts, vorzugsweise auf Höhe des Bodenschenkels, eine Nase zur Abstützung und Anschweißung eines den Untertrumboden bildenden Bodenblechs aufweisen. Die beiden Nasen an den einander zugewandten Innenseiten der Walzprofile bilden zugleich eine Positionierhilfe für das Bodenblech und können als Schweißbadsicherung für eine die Stirnenden des Bodenblechs mit den Walzprofilen verbindende, durchgehende Schweißnaht dienen. Sofern im Untertrum auf separate Seitenprofile verzichtet wird und die seitliche Führung der Kratzer mittels der unteren Zwischenschenkelabschnitte des Walzprofils bewirkt wird, sollte das Bodenblech des Untertrumbodens an seinen Randleisten entsprechend der Profilierung der Kratzer der Kratzerkette abgewinkelt sein und/oder unter dem Bodenblech und am Walzprofil sind keilförmige Versteifungsbleche zur alleinigen oder zusätzlichen Abstützung des Untertrumbodens angeschweißt. Weiter vorzugsweise ist der Bodenschenkel relativ zum unteren Zwischenschenkelabschnitt um mehr als 90°, ggf. etwa 94° ± 2° abgewinkelt. Bei einer erfindungsgemäßen Ausgestaltung des Walzprofils kann der Bodenschenkel nach außen über den Deckschenkel hinausragen und einstückig, vorzugsweise über einen Stufenversatz, in den Bodenleistenabschnitt übergehen. Bei einer alternativen Ausführungsform können der Bodenschenkel und der Deckschenkel etwa auf einer Vertikallinie enden. Als Bodenleistenabschnitt kann dann ein zusätzlicher Walzprofilstab od.dgl. angeschweißt werden. Der mehrteilige Aufbau des Bodenabschnitts erleichtert das Walzen des die Seitenwangen bildenden Walzprofils und ermöglicht die höchste Gewichtsminimierung und -optimierung des Walzprofils. Bei letzterer Ausführungsform ist besonders günstig, wenn der Bodenschenkel des Walzprofils in einer annähernd L-förmigen, einen Auflagefuß auf dem Liegenden bildenden Schenkelverdickung endet. Die Schenkelverdickung ermöglicht, daß bei Verwendung des Rinnenschusses als Strebförderer abbaustoßseitig und versatzseitig in unterschiedlichen Höhen Bodenleisten, Bleche od.dgl. angeschweißt werden können.

In der bevorzugten Ausgestaltung bilden zwei parallel nebeneinander angeordnete und eine Öffnung zwischen sich freilassende Blechstreifen das Zwischenblech, welche in der unteren Stufe der Kröpfung der Walzprofile angeschweißt werden. Die Öffnung zwischen den beiden Blechstreifen reduziert das Gesamtgewicht des Rinnenschusses und ermöglicht gleichzeitig, daß nach Demontage eines Wechseltroges oder eines als Inspektionstrog ausgeführten Wechseltroges eine Inspektionsöffnung für den Untertrum vorhanden ist. Bei der Ausführungsform mit Wechseltrog wird besonders bevorzugt, wenn dessen Seitenprofile jeweils Horizontalschenkel aufweisen, die mit den Deckschenkeln des Walzprofils über vorzugsweise jeweils eine einzige durchgehende Längsschweißnaht als Wechseltrog-Arretiermittel verschweißt sind. Es versteht sich, daß hierfür der Deckschenkel vorzugsweise weiter nach außen hinaus ragt als der Horizontalschenkel der Seitenprofile des Wechseltroges. Alternativ kann das Seitenprofil jeweils L-förmig sein und über vorzugsweise eine einzige durchgehende Längsschweißnaht am Spalt zwischen Seitenprofil und Deckschenkel mit diesem verschweißt sein. Weiter vorzugsweise kann dann der nach innen ragende Horizontalschenkel an der Oberseite bündig mit dem Deckschenkel des Walzprofils abschließen. Zur Demontage des Wechseltroges wird dann die Längsschweißnaht maschinell aufgetrennt, beispielsweise ausgefräst. Durch das feste Verschweißen des Wechseltroges mit dem Deckschenkel des Walzprofils werden sämtliche Nachteile, wie sie bei lösbaren Befestigungsmittel für Wechseltröge existieren, vermieden. Durch den über die Rinnenschußlänge konstanten Aufbau sowohl der Walzprofile als auch der Seitenprofile der Wechseltröge ist nicht nur eine automatisierte, maschinelle Schweißung und Fertigung einzelner Rinnenschüsse möglich, sondern auch das Auftrennen der Schweißnähte zum Austauschen eines Wechseltroges kann maschinell erfolgen. Die das Zwischenblech bildenden Blechstreifen und/oder der Förderboden können endseitig mit durch Brennschneiden hergestellten, bogenförmigen Rändern versehen sein, wobei das Wölbungsprofil des einen Randes komplementär zum Wölbungsprofil des anderen Randes ausgebildet ist. In bevorzugter Ausführung eines Wechseltroges als Inspektionstrog besteht dieser aus drei identisch zueinander ausgeführten Trogabschnitten mit jeweils einem Förderbodenabschnitt und zwei im wesentlichen T-förmigen Seitenprofilabschnitten, wobei die Außenkantenflächen der Horizontalschenkel der Seitenprofilabschnitte mit der Oberseite der Deckschenkel über Längsschweißnähte verschweißt sind und der mittlere Trogabschnitt mittels lösbarer Trogbefestigungsmittel an den beiden anderen Trogabschnitten und/oder an den die Seitenwangen bildenden Walzprofilen arretiert ist. Vorzugsweise sind die Förderbodenabschnitte aller Trogabschnitte trogendseitig mit vorzugsweise durch Brennschneiden hergestellten gewölbten Rändern versehen, wobei das Wölbungsprofil des einen Randes komplementär zum Wölbungsprofil des anderen Randes ausgebildet ist.

Zweckmäßigerweise ragt einer der Blechstreifen am Rinnenschußende endseitig über beide Walzprofile hinaus und der andere Blechstreifen ist gegenüber dem Rinnenschußende zurückversetzt angeordnet. Mit diesen Maßnahmen entsteht eine Überlappung am Rinnenstoß, so daß Feingut aus dem Obertrum nicht in den Untertrum fallen kann. Für die Schweißkonstruktion des Rinnenschusses umfassen die Rinnenschußverbindungsmittel vorzugsweise geschmiedete und an dem Walzprofil angeschweißte Knebeltaschen, in die Knebelköpfe von Knebelbolzen einlegbar sind. Wie weiter oben bereits dargelegt, weisen die Knebeltaschen Ausbuchtungen auf, die an die Einbuchtungen unterhalb der Kröpfung und zwischen dem unteren Zwischenschenkelabschnitt und dem Bodenschenkel des Walzprofils angepaßt sind und formschlüssig in diese Einbuchtung eingreifen können. Das Anschweißen der Knebeltaschen an den Walzprofilen erfolgt vorzugsweise dergestalt, daß die Knebeltaschen an einem Rinnenschußende über die Walzprofile hinausragen und am anderen Rinnenschußende zurückversetzt angeordnet sind, so daß durch die Überlappung der Knebeltaschen am Rinnenschußstoß zwischen zwei benachbarten Rinnenschüssen ein Ermüdungsverschleiß oder Ausbrüche an den Stirnenden der Walzprofile und/oder des Förderbodens vermieden werden.

Der vorzugsweise parallele Versatz des unteren Zwischenschenkelabschnitts zum oberen Zwischenschenkelabschnitt sollte mit z.B. 35mm ±2 mm größer als die Wandstärke der Vertikalschenkel der Seitenprofile des Wechseltrogs sein, wobei in deren Wandstärke eine ausreichende Abnutzungs- und Verschleißdicke von mehreren mm, z.B. 15 mm, berücksichtigt werden kann. Die Öffnungsweite der Walzprofile zwischen dem Deckschenkel und den Bodenschenkeln kann sich zum Zwischenschenkel hin verjüngen, falls der Deckschenkel und der Bodenschenkel mit sich verbreiterndem Querschnitt in den Zwischenschenkelabschnitt übergehen.

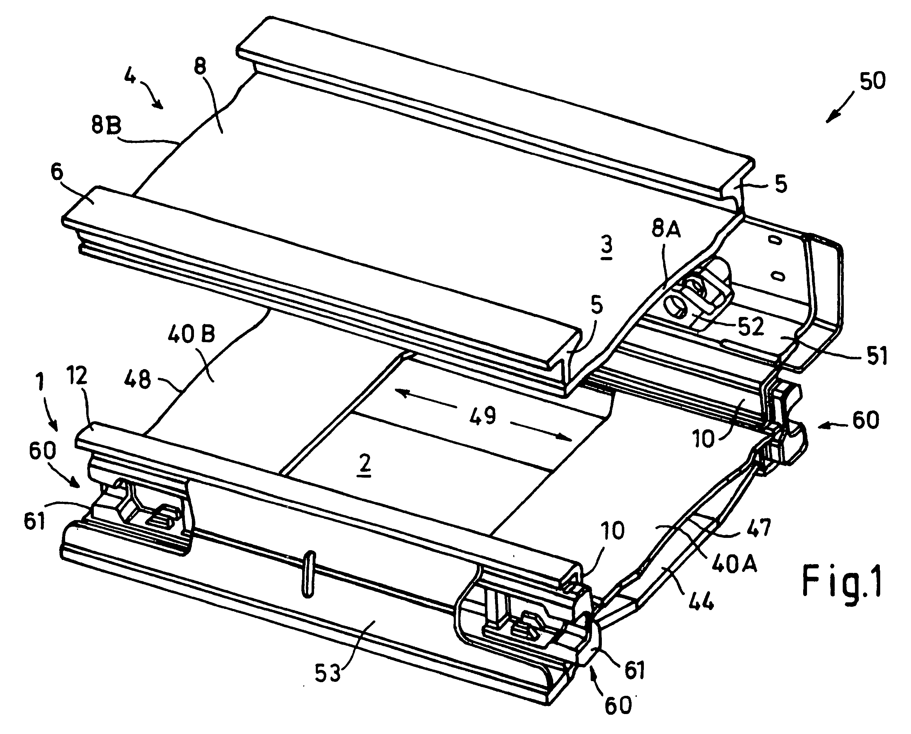

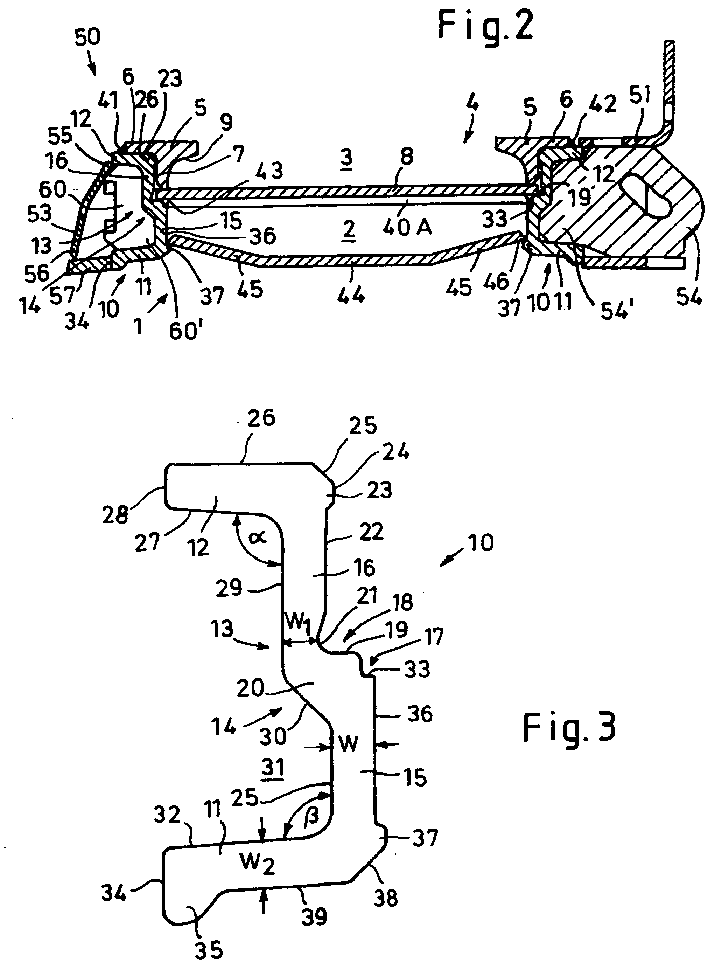

Weitere Vorteile und Ausgestaltungen des erfindungsgemäßen Rinnenschuß ergeben sich aus der nachfolgenden Beschreibung von mehreren, schematisch in der Zeichnung gezeigten Ausführungsbeispielen. In der Zeichnung zeigen:
- **Fig. 1**: perspektivisch einen erfindungsgemäßen Rinnenschuß gemäß einem ersten Ausführungsbeispiel mit abgehobenem Wechseltrog;
- **Fig. 2**: einen Vertikalschnitt durch einen Rinnenschuß gemäß der Ausführungsform nach Fig. 1 bei montiertem Wechseltrog;
- **Fig. 3**: die erfindungsgemäße Profilform des beim Rinnenschuß nach den Fig. 1 und 2 eingesetzten Walzprofils;
- **Fig. 4**: einen Vertikalschnitt durch einen Rinnenschuß mit einem Walzprofil gemäß einer alternativen Ausführungsform;
- **Fig. 5**: einen Vertikalschnitt durch einen Rinnenschuß mit einem Walzprofil gemäß einer dritten Ausführungsform;
- **Fig. 6**: perspektivisch einen aus drei identischen Trogabschnitten gebildeten Inspektionstrog; und
- **Fig. 7**: eine Draufsicht auf den Inspektionstrog.
Der in den Fig. 1 und 2 insgesamt mit 50 bezeichnete Rinnenschuß hat eine den Untertrum 2 aufweisende Rahmenkonstruktion 1 und einen den Obertrum 3 bildenden, auswechselbar ausgeführten und an der Rahmenkonstruktion 1 sich abstützenden Wechseltrog 4. Der Wechseltrog 4 besteht aus einer Schweißkonstruktion mit zwei spiegelverkehrt angeordneten, etwa T-förmigen und aus Walzprofilen bestehenden Seitenprofilen 5, die jeweils einen Horizontalsteg 6 und einen Vertikalsteg 7 umfassen, der über eine nicht dargestellte Schweißnaht am Fuß des Vertikalstegs 7 mit dem aus einem Walzblech bestehenden Förderboden 8 verschweißt ist. Der Förderboden 8 ragt seitlich über die Vertikalstege 7 der Seitenprofile 5 um ein geringes Maß hinaus, so daß maschinell eine Schweißnaht zwischen dem Vertikalsteg 7 und dem Förderboden 8 angebracht werden kann. Die dem Obertrum 3 bzw. dem Förderboden 8 zugewandte Innenflanke 9 der Seitenprofile 5 ist mit einer verschleißgünstigen, an das Außenprofil der im Untertrum 2 und Obertrum 3 umlaufenden, nicht gezeigten Kratzer einer Kratzerkette angepaßten Profilkontur versehen.

Die Rahmenkonstruktion 1 des Rinnenschusses 50 umfaßt als erfindungswesentliche Bauteile zwei identisch zueinander ausgebildete, unsymmetrische und spiegelverkehrt angeordnete, durch Profilwalzen hergestellte Walzprofile 10 mit einer etwa U-förmigen Profilform, welche die Seitenwangen des Rinnenschuß 50 bilden. Der Aufbau der Walzprofile 10 wird nun zuerst unter Bezugnahme auf Fig. 3 erläutert.

Das einstückige Walzprofil 10 umfaßt einen Bodenschenkel 11, einen Deckschenkel 12 und einen diese miteinander verbindenden Zwischenschenkel 13, der etwa mittig eine Kröpfung 14 aufweist, die den Zwischenschenkel 13 in einen unteren Zwischenschenkelabschnitt 15 und einen oberen Zwischenschenkelabschnitt 16 unterteilt. Der untere Zwischenschenkelabschnitt 15 ist wie der obere Zwischenschenkelabschnitt 16 im wesentlichen als sich geradlinig erstreckender und vertikal verlaufender Wandabschnitt zwischen der Kröpfung 14 und dem Bodenschenkel 11 bzw. dem Deckschenkel 12 ausgeführt. Durch die Kröpfung 14 ist der obere Zwischenschenkelabschnitt 16 gegenüber dem unteren Schenkelabschnitt 15 parallel um mehr als die Wanddicke W des unteren Zwischenschenkelabschnitts 15 nach außen versetzt, wobei hier unter "nach außen" einen Versatz oder eine Abwinklung zur Außenseite des montierten Rinnenschusses meint, während innen oder nach innen die den beiden Trumen 2, 3 zugewandten Seiten bezeichnet. Der Bodenschenkel 11 und der Deckschenkel 12 sind entsprechend relativ zum unteren Zwischenschenkelabschnitt 15 bzw. oberen Zwischenschenkelabschnitt 16 nach außen abgewinkelt. Die Kröpfung 14 des Zwischenschenkels 13 ist an dessen Innenseite mit einer unteren Stufe 17 und einer oberen Stufe 18 versehen, wobei die obere Stufe 18 mit der horizontalen Oberseite 19 der Kröpfung 14 zusammenfällt und eine wesentlich größere Breite aufweist als die horizontale Stützfläche 33 der Stufe 17. Beide Stufen 17, 18 werden durch die Materialanhäufung 20 im Bereich der Kröpfung 14 nach unten abgestützt und liegen vertikal fluchtend über dem unteren Zwischenschenkelabschnitt 15, so daß die in die Stufen 17, 18 eingeleiteten Kräfte und Belastungen im kräftigen, unteren Zwischenschenkelabschnitt 15 momentenfrei aufgenommen werden können. Die Deckfläche 19 der oberen Stufe 18 mündet in eine Rundung 21, die gegenüber der Innenseite 22 des oberen Zwischenschenkelabschnitts 16 nach außen ausgemuldet ist, so daß das Walzprofil 10 im Bereich der Rundung 21 seine minimalste Wandstärke W₁ hat. Die Innenseite 22 des oberen Zwischenschenkelabschnitts 16 weist auf Höhe des Deckschenkels 12 eine Rippe 23 auf, deren innenseitige Stirnfläche 24 vertikal mit der Außenseite 25 des unteren Zwischenschenkelabschnitts 15 fluchtet und etwa 5mm über die Innenseite 22 des oberen Zwischenschenkelabschnitts 16 hinausragt. Die Stirnfläche 24 der Rippe 23 geht über eine Zwischenschräge 25 in die horizontal und rechtwinklig zur Innenseite 22 ausgerichtete Oberseite 26 des nach außen abgewinkelten Deckschenkels 12 über. Der Deckschenkel 12 verbreitert sich hierbei, ausgehend von seiner Außenstirnfläche 28, auf den Zwischenschenkel 13 zu, so daß die Unterseite 27 des Deckschenkel 12 mit der Außenseite 29 des oberen Zwischenschenkelabschnitts 16 einen Winkel α von etwa 94° einschließt. In der Krümmung zwischen dem Deckschenkel 12 und dem oberen Zwischenschenkelabschnitt 16 bildet das Walzprofil 10 eine den Deckschenkel 12 stabilisierende und abstützende Verdickung. Die Außenseite 29 des oberen Zwischenschenkelabschnitts 16 geht über eine um einen Winkel von etwa 45° angeordnete Schräge 30 in die Außenseite 25 des unteren Zwischenschenkelabschnitts 15 über, wobei die Schräge 30 die Außenwand der Kröpfung 14 bzw. Materialanhäufung 20 bildet. Durch die Kröpfung 14 und den Versatz zwischen dem unteren Zwischenschenkelabschnitt 15 und dem oberen Zwischenschenkelabschnitt 16 entsteht im Walzprofil 10 eine Einbuchtung 31, die sich unterhalb des oberen Zwischenschenkelabschnitts 16 erstreckt und die von der Schräge 30, der Außenwand 25 des unteren Zwischenschenkelabschnitts 15 und der Oberwand 32 des Bodenschenkels 11 begrenzt wird. Die Oberwand 32 ist hierbei relativ zur Außenwand 25 um einen Winkel β abgewinkelt, der wie der Winkel α vorzugsweise 94° beträgt. Insgesamt ist das Walzprofil 10 dabei derart aufgebaut, daß die horizontale Stützfläche 33 der Stufe 17 exakt mittig zwischen der Oberwand 32 des Bodenschenkels 11 und der Unterseite 27 des Deckschenkels 12 angeordnet ist und zu diesen beiden einen maximalen Abstand von etwa 125mm hat. Der Bodenschenkel 11 endet an seinem äußeren Schenkelende 34 in einer annähernd L-förmigen Schenkelverdickung bzw. -stauchung 35, mit der sich das Walzprofil 10 beim Rinnenschuß 50 (Fig. 1) auf dem Liegenden abstützen kann, die die Unterseite 39 des Bodenschenkels 12 vom Liegenden beabstandet und die mit einer S-förmigen Wölbung in die Unterseite 39 des Bodenschenkels 11 übergeht. An die Unterseite 39 des Bodenschenkels 11 schließt eine Zwischenschräge 38 an, unmittelbar oberhalb der eine Nase 37 ausgebildet ist, die den unteren Abschluß der Innenwand 36 des unteren Zwischenschenkelabschnitts 15 bildet und an der sich ein Bodenblech als Untertrumboden abstützen kann, wie noch erläutert werden wird. Das Walzprofil 10 hat vorzugsweise eine Gesamthöhe zwischen der Fußseite der Schenkelverdickung 35 und der Oberseite 26 des Deckschenkels von etwa 340 mm bei einer Wandstärke W₂ im Bodenschenkel 11 von etwa 35 mm, einer Wandstärke W im unteren Zwischenschenkelabschnitt 15 und im oberen Zwischenschenkelabschnitt 16 von etwa 31 bzw. 30 mm und einer minimalen Wandstärke W₁ im Bereich der Rundung 21 unmittelbar oberhalb der Kröpfung 14 von etwa 25 mm. Sämtliche Übergänge sind fertigungsbedingt bei dem Walzprofil 10 gerundet.

Es wird nun wieder Bezug genommen auf die Fig. 1 und 2. Die beiden aus dem Walzprofil 10 gemäß Fig. 3 gebildeten Seitenwangen des Rinnenschuß 50 sind über die beiden Blechstreifen 40A, 40B, die mit ihren Seitenrändern 43 jeweils auf der Stützfläche 33 der unteren Stufen 17 (Fig. 3) des Walzprofils 10 aufliegen und dort über eine horizontal verlaufende und mittels eines Schweißautomaten und/oder Schweißroboters anzubringenden Schweißnaht verschweißt sind, versteift. Die Höhe der Zwischenbleche 40A, 40B ist gleich oder geringfügig kleiner als der Abstand zwischen der Stützfläche 33 und der Deckfläche 19 an der Kröpfung 14, so daß sich der Förderboden 8 des Wechseltroges 4 im Montagezustand an der Deckfläche 19 der oberen Stufe 18 im Bereich der Kröpfung 14 der Walzprofile abstützen kann. Wie Fig. 2 weiter erkennen läßt, liegt der Wechseltrog 4 mit den Horizontalschenkeln 6 der Seitenprofile 5 an der Oberseite 26 der Deckschenkel 12 der Walzprofile 10 auf und ist dort beidseitig mittels Längsschweißnähten 41, 42 mit diesen verschweißt, wobei die Schweißnaht 42 auch entfallen könnte. Durch den über die Rinnenschußlänge konstanten Profilquerschnitt des Walzprofils 10 und der Seitenprofile 5 können auch die Schweißnähte 41, 42 automatisiert mittels eines Schweißroboters in definierter Lage angebracht werden. Zur Demontage des Wechseltrogs 4 können die Schweißnähte 41, 42 aufgetrennt, beispielsweise ausgefräst werden, um einen neuen Wechseltrog 4 einzusetzen und mittels neuer Schweißnähten 41, 42 mit den die Seitenwangen bildenden Walzprofilen 10 zu verschweißen. Die Positionierung des Wechseltrogs 4 quer zur Laufrichtung der Kratzer erfolgt ausschließlich mittels der Stirnflächen 24 der Rippen 23. Der Versatz zwischen dem unteren Zwischenschenkelabschnitt 15 und dem oberen Zwischenschenkelabschnitt 16 im Walzprofil 10 ist, wie Fig. 2 gut erkennen läßt, derart gewählt, daß im Montagezustand die Profilkontur 9 am Vertikalsteg 7 der Seitenprofile 5 mit den im wesentlichen ebenen bzw. geraden Innenflächen 36 der unteren Zwischenschenkelabschnitte 15 fluchtet, so daß der lichte Abstand zwischen den beiden unteren Zwischenschenkelabschnitten 15 des jeweiligen Walzprofils 10 dem lichten Abstand zwischen den Vertikalstegen 7 der Seitenprofile 5 entspricht und die Kratzer im Betrieb des Kettenkratzförderers mit geringer Flächenreibung sowohl zwischen den von den unteren Zwischenschenkelabschnitten 15 gebildeten ebenen bzw. geraden Seitenbegrenzungen des Untertrums 2 als auch zwischen den gewölbten Seitenprofilen 5 im Obertrum 3 geführt werden. Die seitliche Führung der Kratzer im Untertrum an geraden Flanken bzw. Innenseiten 36 der Walzprofile 10 sorgt für eine weitere Vereinfachung des Aufbaus des Rinnenschusses. Als Untertrumboden ist ein Bodenblech 44 mit nach oben abgewinkelten und an die Profilform der nicht dargestellten Kratzer angepaßten Randleisten 45 vorgesehen, die sich mit ihren Randkanten 46 an den Nasen 37 im Fußbereich der unteren Zwischenschenkelabschnitte 15 abstützen und oberhalb der Nasen 37 mittels weiterer, nicht gezeigter Schweißnähte, die aufgrund der linearen Ausrichtung ebenfalls automatisiert von oben mit einem Schweißroboter angebracht werden können, verschweißt sind. Die Nasen 37 bilden zugleich eine Schweißbadsicherung für die Schweißnähte.

Der in den Fig. 1 und 2 dargestellte Rinnenschuß 50 ist mit Anbauteilen zur Verwendung in einem Strebförderer versehen. Das in Fig. 1 hintere und in Fig. 2 rechte Walzprofil 10 bildet bei einem Strebförderer die versatzseitige Seitenwange, an welcher ein Seitenblech 51 angeschweißt ist, um versatzseitig mittels der Halter 52 einen nicht gezeigter Triebstock für einen Walzenlader befestigen zu können, während abbaustoßseitig ein abgewinkeltes Leitblech 53 angeschweißt ist, welches beim Rücken des Strebförderers bzw. Rinnenschuß 50 als statische Laderampe für Haufwerk dient. Das Rücken des Rinnenschuß 50 bzw. Strebförderers erfolgt mittels an einem nicht gezeigten Ausbau widergelagerter und in die versatzseitig montierten Anschlußkonsolen 54 eingreifender, nicht gezeigter Schreitbalken. Das Leitblech 53 ist an seiner oberen Kante 54 über eine nicht gezeigte Schweißnaht mit dem Deckschenkel 12 des Walzprofils 10, insbesondere mit dessen Außenstirnfläche 28, und an seiner unteren Kante 56 mit einer von einem Walzprofilstab gebildeten Bodenleiste 57 verschweißt, die an der Schenkelaußenseite 34 des Bodenschenkels 11 angeschweißt ist.

Um mit den erfindungsgemäßen Rinnenschüssen 50 einen Streb- oder Streckenförderer aufzubauen, sind an beiden Walzprofilen 10 nahe der entgegengesetzten Rinnenschußenden vorzugsweise geschmiedete Knebeltaschen 60 eingeschweißt, die, wie Fig. 2 gut erkennen läßt, mit einer Ausbuchtung 60' versehen sind, die in die Einbuchtung (31, Fig. 3) im Walzprofil 10 formschlüssig eingreift und die Kröpfung 14 am Walzprofil 10 untergreift, um den oberen Zwischenschenkelabschnitt 16 zusätzlich abzustützen. An einem der beiden Rinnenschußenden überragen, wie in Fig. 1 am rechten Rinnenschußende gut zu erkennen ist, die beiden Knebeltaschen 60 die beiden Walzprofile 10 um wenige cm, während am anderen Rinnenschußende (in Fig. 1 links) die beiden Knebeltaschen 60 zurückversetzt sind, so daß bei zwei nebeneinander montierten Rinnenschüssen 50 die Stirnfronten 61 zweier Knebeltaschen 60 unmittelbar aneinanderstoßen. Zur Befestigung zweier Rinnenschüsse werden nicht gezeigte Knebelbolzen in die Knebeltaschen 60 eingelegt. Auch die Konsole 54 hat eine Profilkontur mit einer Ausbuchtung 54', mit der sie formschlüssig in die Einbuchtung (31, Fig. 3) an der Außenseite des unteren Zwischenschenkelabschnitts 15 des versatzseitigen Walzprofils 10 einfaßt und hierdurch die Kröpfung 14 formschlüssig untergreift. Wie bei den Knebeltaschen 60 wird auch bei der Montage der Anschlußkonsole 54 deren exakte Positionierung durch die Einbuchtung in der Seitenwange 10 und zugehörige Ausbuchtung 54' an der Anschlußkonsole 54 mitbestimmt.

Fig. 1 zeigt desweiteren, daß der Blechstreifen 40A das Walzprofil 10 an einem Rinnenschußende überragt, während der Blechstreifen 40B am hinteren Rinnenschußende entsprechend gegenüber den Walzprofilen 10 zurückversetzt ist. Der endseitige Rand 47 des Blechstreifens 40A und der endseitige Rand 48 des Blechstreifens 40B sind, wie die Ränder 8A, 8B des Förderbodens 8, durch Brennschneiden bogenförmig hergestellt, so daß die Kratzer am Rinnenstoß vergleichsweise geräuschlos in den nachfolgenden Rinnenschuß übertreten. Die beiden Blechstreifen 40A, 40B sind voneinander beabstandet an der Stufe 17 angeschweißt, so daß zwischen den inneren Rändern der Blechstreifen 40A, 40B eine Öffnung ausgebildet ist, die bei abgenommenem Wechseltrog 4 als Inspektionsöffnung für den Untertrum 2 dienen kann.

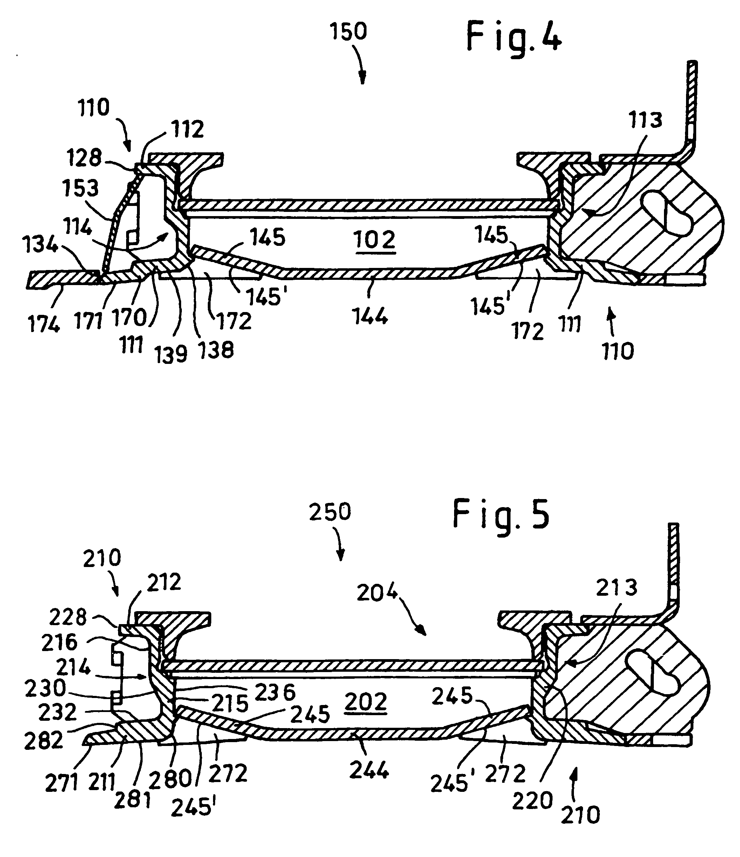

Fig. 4 zeigt ein zweites Ausführungsbeispiel für einen Rinnenschuß 150, wobei gleiche Teile mit gleichen Bezugszeichen versehen sind. Der Rinnenschuß 150 nach Fig. 4 unterscheidet sich vom Rinnenschuß 50 nach den Fig. 1 und 2 insbesondere in der Profilform des Winkelprofils 110 im Bereich des Bodenschenkel 111, während der Zwischenschenkel 113 mit den Stufen in der Kröpfung 114 identisch wie beim vorherigen Ausführungsbeispiel ausgeführt ist, so daß zur Vermeidung von Wiederholungen auf die vorherige Beschreibung verwiesen wird; der Bodenschenkel 111 hat hier anstelle einer Schenkelverdickung einen Stufenabsatz 170, über den er einstückig in einen Bodenleistenabschnitt 171 übergeht. Das Schenkelende 134 des Bodenschenkels 111 überragt daher die Außenstirnfläche 128 des Deckschenkels 112 des Walzprofils 110 nach außen. Durch die einstückige Ausbildung von Bodenleistenabschnitt 171 und Bodenschenkel 111 entfällt eine Schweißnaht. Beim Rinnenschuß 150 ist das den Untertrumboden des Untertrums 102 bildende Bodenblech 144 von mehreren an ihrer Deckseite keilförmiger und an ihrer Bodenseite ebener, Bodenrippen bildender Versteifungsbleche 172 untergriffen, die an den Unterseiten 145' der abgewinkelten Randleisten 145, an der Unterseite 139 des Bodenschenkels 111 sowie an der unteren Zwischenschräge 138 angeschweißt sind. Am Schenkelende 134 vom Bodenleistenabschnitt 171 ist eine Maschinenfahrbahn 174 angeschweißt, auf der sich ein Walzenlader als Gewinnungsmaschine vor dem Rinnenschuß und vor dem Leitblech 153 abbaustoßseitig abstützen kann.

Fig. 5 zeigt ein drittes Ausführungsbeispiel für einen Rinnenschuß 250. Auch hier sind gleiche Teile mit wiederum um 100 erhöhten Bezugszeichen versehen. Der Wechseltrog 204 ist identisch wie beim ersten und zweiten Ausführungsbeispiel ausgebildet und das Walzprofil 210 hat im Deckschenkel 212 und im oberen Zwischenschenkelabschnitt 216 denselben Aufbau und dieselben Abmessungen wie bei den Ausführungsbeispielen nach den Fig. 1 bis 4. Der untere Zwischenschenkelabschnitt 215 des Zwischenschenkels 213 ist an seiner Innenseite 236 plan und geht ohne Nase über eine Rundung 280 mit vergleichsweise großem Krümmungsradius in den Bodenschenkel 211 über, der an der Unterseite 281 über die gesamte Rinnenschußlänge und Walzprofilbreite eben ist und einstückig in dem Bodenleistenabschnitt 271 endet. An der Oberseite 232 des Bodenschenkels 211 ist auf einer Vertikallinie mit der Außenstirnfläche 228 des Deckschenkels 212 ein Absatz 282 ausgeprägt; der Bodenleistenabschnitt 271 hat eine erheblich geringere Wandstärke als der Bodenschenkel 211 innenseitig vom Absatz 280, mithin im Bereich des Öffnungsraumes zwischen dem Deckschenkel 211 und dem Bodenschenkel 212 des Walzprofils 210. Das den Untertrumboden des Untertrums 202 bildende Bodenblech 244 wird wiederum mittels mehrerer über die Rinnenschußlänge verteilter Versteifungsbleche 272, die an der Deckseite keilförmig und an der Bodenseite eben sind, abgestützt, die unterhalb der Rückseiten 245' der Randleisten 245 und im Bereich der Rundungen 280 an den unteren Schenkelabschnitten 215 des Walzprofils 210 angeschweißt sind. Die Kröpfung 214 des Walzprofils 210 beim Rinnenschuß 250 hat an der Außenseite eine Schräge 230, die mit einem Winkel von etwa 60° steiler verläuft als die Schräge bei den Rinnenschüssen 50 bzw. 150 nach den Fig. 1 bis 4. Die Materialanhäufung 220, mit der die Stufen an der Kröpfung 214 unterstützt werden, fällt daher beim Walzprofil 210 kräftiger aus und das Walzprofil 210 kann aufgrund dieser stärkeren Materialanhäufung und der kräftigeren Auslegung des Bodenschenkels 211 besonders günstig eine am Deckschenkel 212 befestigte, abbaustoßseitig Walzenladerfahrbahn abstützen.

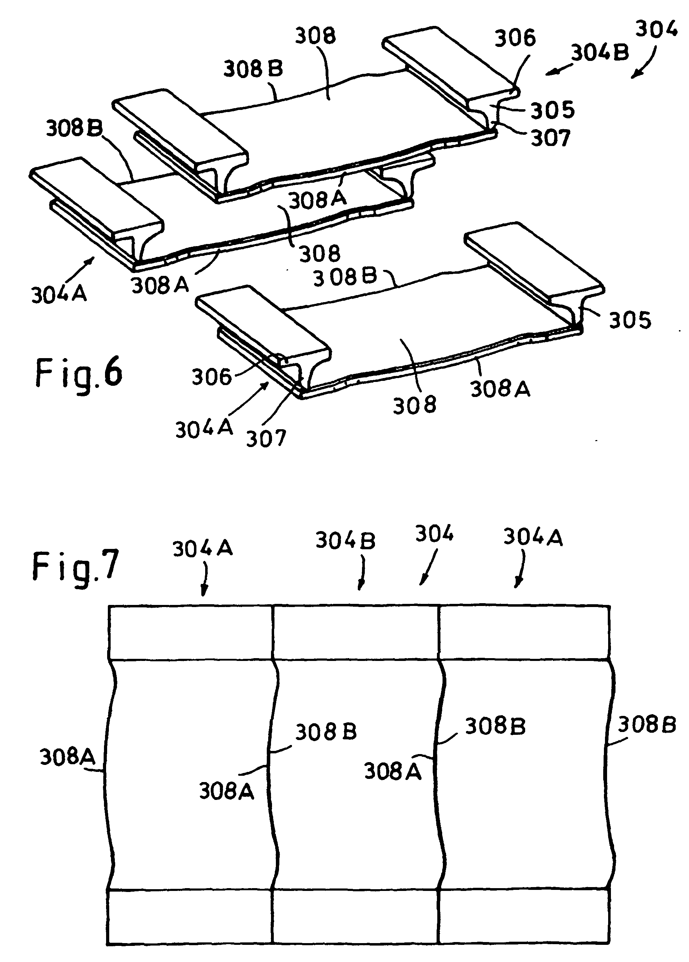

Die Fig. 6 und 7 zeigen die bevorzugte Ausführungsform für einen als Wechseltrog 304 ausgebildeten Inspektionstrog. Er besteht aus drei identisch zueinander ausgeführten Trogabschnitten 304A, 304B mit jeweils einem Förderbodenabschnitt 308 und zwei im wesentlichen T-förmigen Seitenprofilabschnitten 305 mit Vertikalschenkel 307 und Horizontalschenkel 306, die das identische Profil aufweisen wie die Seitenprofile 5, 105, 205 der weiteren Wechseltröge. Beim Inspektionstrog werden die Außenstirnflächen 328 der Horizontalschenkel 306 der Seitenprofilabschnitte 305 der beiden äußeren Trogabschnitte 304A mit der Oberseite der Deckschenkel der Walzprofile 10, 110 bzw. 210 über Längsschweißnähte verschweißt, die sich über die Länge des jeweiligen Trogabschnitts 304A erstrecken. Der mittlere Trogabschnitt 304B hingegen wird mittels lösbarer, nicht gezeigter Trogbefestigungsmittel an den beiden anderen Trogabschnitten 304A und/oder an den die Seitenwangen bildenden Walzprofilen 10, 110, 210 arretiert, so daß er für eine Inspektion der Kratzerkette im Untertrums durch die Öffnung (49, Fig. 1) zwischen den Zwischenblechen hindurch kurzfristig demontiert werden kann. Die Förderbodenabschnitte 308 aller Trogabschnitte 304A, 304B sind trogendseitig mit vorzugsweise durch Brennschneiden hergestellten gewölbten Rändern 308A, 308B versehen, wobei das Wölbungsprofil des einen Randes 308A komplementär zum Wölbungsprofil des anderen Randes 308B ausgebildet ist, wie der Fig. 7 besonders gut entnommen werden kann.

Für den Fachmann ergeben sich aus der vorhergehenden Beschreibung eine Reihe von Modifikationen, die in den Schutzbereich der anhängenden Ansprüche fallen sollen. Insbesondere bezüglich der Profilierung des Bodenschenkels und der Profilierung der Außenseite der Kröpfung sind auch Zwischenformen denkbar, die durch Walzen herstellbar sind und weiterhin eine formschlüssige Abstützung der Knebelbolzentasche und Anschlußkonsolen unter gleichzeitiger Abstützung des oberen Zwischenschenkelabschnitts und Deckschenkels des Walzprofils ermöglichen. Bei sämtlichen erfindungsgemäßen Ausführungsformen bestehen die Seitenwangen aus einem die Kräfte und Belastungen aufnehmenden Walzprofil mit Kröpfung und die Rinnenschüsse insgesamt aus einer minimalen, mit wenigen Montageschritten zu fügenden Anzahl an vorzugsweise gewichtsoptimierten Teilen. Die Seitenprofile des Wechseltroges könnten abweichend vom gezeigten Ausführungsbeispiel auch L-förmig bzw. winklig ausgeführt sein. Das Zwischenblech könnte auch einstückig ausgebildet sein, auch wenn die zweiteilige Ausführungsform mit zwei Blechstreifen sowohl hinsichtlich der Fertigungskosten als auch hinsichtlich des Gesamtgewichtes des Rinnenschuß Vorteile bietet.

## Patentansprüche

1. Rinnenschuß für untertägige Streb- und Streckenförderer, mit Untertrum (2; 102; 202) und Obertrum (3) zur Führung der Kratzer einer Kratzerkette, mit einer geschweißten Rahmenkonstruktion (1), die fest miteinander verbundene, einen Bodenschenkel (11; 111; 211) und einen Deckschenkel (12; 112; 212) sowie einen diese verbindenden, aufragenden Zwischenschenkel (13) umfassende Seitenwangen mit einer über die Rinnenschußlänge konstanten Profilform aufweist, mit einem Förderboden (8, 308) und mit Rinnenschußverbindungsmitteln (60), wobei die Seitenwangen spiegelverkehrt angeordnet sind und der Zwischenschenkel (13) mit einer Kröpfung (14; 114; 214) versehen ist, an der innenseitig wenigstens eine Stufe (17) zur Abstützung und Anschweißung wenigstens eines die Seitenwangen zur Rahmenkonstruktion (1) versteifenden Zwischenblechs (40A, 40B) ausgebildet ist, wobei die Seitenwangen aus einstückigen Walzprofilen (10; 110; 210) mit einer unsymmetrischen Profilform bestehen, **dadurch gekennzeichnet, daß** die Walzprofilen einen Deckschenkel (12,112,212) sowie einen Bodenschenkel (11, 111, 211) umfaßen, die nach außen abgewinkelt sind, wobei der obere Zwischenschenkelabschnitt (16; 216) oberhalb der Kröpfung (14; 114; 214) gegenüber dem unteren Zwischenschenkelabschnitt (15; 215) unterhalb der Kröpfung (14; 114; 214) nach außen versetzt ist .

2. Rinnenschuß nach Anspruch 1, **dadurch gekennzeichnet, daß** der Zwischenschenkel (13) des Walzprofils (10) mit einer zweiten Stufe (18) zur Abstützung des Förderbodens (8) versehen ist, wobei vorzugsweise die obere Deckfläche (19) der Kröpfung (14) die zweite Stufe bildet.

3. Rinnenschuß nach Anspruch 1 oder 2, **dadurch gekennzeichnet, daß der** obere Zwischenschenkelabschnitt (16; 216) gegenüber dem unteren Zwischenschenkelabschnitt (15; 215) um mehr als die Wandstärke (W) der Zwischenschenkelabschnitte (15, 16; 215, 216) nach außen versetzt ist.

4. Rinnenschuß nach einem der Ansprüche 1 bis 3, **dadurch gekennzeichnet, daß** der untere Zwischenschenkelabschnitt des Walzprofils (10; 110; 210) unterhalb der Stufe (17) mit seiner Innenseite (36; 236) die Seitenwände des Untertrums (2; 102; 202) bildet und/oder der obere Zwischenschenkelabschnitt (16; 216) oberhalb der Stufe und Kröpfung mit seiner Innenseite eine Aufnahme für einen Wechseltrog (4; 104; 204) als Obertrum begrenzt, wobei vorzugsweise der Wechseltrog (4) aus zwei gewalzten, im wesentlichen L-förmigen oder T-förmigen und vorzugsweise an die Profilform der Kratzer angepaßten Seitenprofilen (5) sowie einem mit diesen verschweißten Förderboden (8) besteht.

5. Rinnenschuß nach einem der Ansprüche 1 bis 4, **dadurch gekennzeichnet, daß** die Wanddicke (W) des unteren Zwischenschenkelabschnitts (15; 215) im wesentlichen gleich ist zu der des oberen Zwischenschenkelabschnitts (16;216) und geringer ist als die Wanddicke (W₂) des Bodenschenkels (11; 111; 211) und/oder des Deckschenkels (12; 112; 212) und/oder daß sich der untere Zwischenschenkelabschnitt (15; 215) zwischen dem Bodenschenkel und der Kröpfung als gerader Wandabschnitt erstreckt.

6. Rinnenschuß nach einem der Ansprüche 1 bis 5, **dadurch gekennzeichnet, daß** das Walzprofil (10; 110; 210) im Bereich der Kröpfung (14; 114; 214) mit einer die Stufe/n verstärkenden Materialanhäufung (20; 220) versehen ist und/oder unmittelbar oberhalb der Kröpfung (14; 114; 214) die schmalste Wandstärke (W₁) aufweist.

7. Rinnenschuß nach einem der Ansprüche 1 bis 6, **dadurch gekennzeichnet, daß** der Deckschenkel (12; 112; 212) des Walzprofils (10; 110; 210) rechtwinklig zum oberen Zwischenschenkelabschnitt (16; 116; 216) abgewinkelt ist und/oder an der Innenseite (22) des oberen Zwischenschenkelabschnitts auf Höhe des Deckschenkels eine Rippe (23) ausgebildet ist.

8. Rinnenschuß nach einem der Ansprüche 1 bis 7, **dadurch gekennzeichnet, daß** der untere Zwischenschenkelabschnitt (15) und der Bodenschenkel (11) eine Einbuchung (31) zur formschlüssigen Abstützung und Aufnahme entsprechender Ausbuchtungen (54'; 60') an den Rinnenschußverbindungsmitteln (60) und/oder an einer Anschlußkonsole (54) für den Schreitbalken bilden und begrenzen.

9. Rinnenschuß nach einem der Ansprüche 1 bis 8, **dadurch gekennzeichnet, daß** der Zwischenschenkel (13; 113; 213) an der Außenseite im Bereich der Kröpfung (14; 114; 214) mit einer Schräge von 45° oder 60° oder einem Zwischenwert versehen ist und/oder an der Innenseite (36) des unteren Zwischenschenkelabschnitts (15), vorzugsweise auf Höhe des Bodenschenkels (11), eine Nase (37) zur Abstützung und Anschweißung eines den Untertrumboden bildenden Bodenblechs (44) ausgebildet ist.

10. Rinnenschuß nach einem der Ansprüche 1 bis 9, **dadurch gekennzeichnet, daß** das Bodenblech (44; 144; 244) des Untertrumbodens an seinen Randleisten (45; 145; 245) entsprechend der Profilierung der Kratzer der Kratzerkette abgewinkelt ist und/oder unter dem Bodenblech (144; 244) und am Walzprofil (110; 210) keilförmige Versteifungsbleche (172; 272) zur alleinigen oder zusätzlichen Abstützung des Untertrumbodens (144; 244) angeschweißt sind.

11. Rinnenschuß nach einem der Ansprüche 1 bis 10, **dadurch gekennzeichnet, daß** der Bodenschenkel (11; 111; 211) relativ zum unteren Zwischenschenkelabschnitt (15; 115; 215) um mehr als 90° abgewinkelt ist.

12. Rinnenschuß nach einem der Ansprüche 1 bis 11, **dadurch gekennzeichnet, daß** der Bodenschenkel (111; 211) nach außen über den Deckschenkel (112; 212) hinausragt und einstückig in einen Bodenleistenabschnitt (171; 271) übergeht, wobei vorzugsweise der Bodenschenkel (111; 211) über einen Stufenversatz (170) oder eine Stufe (282) im Bodenleistenabschnitt (171; 271) endet.

13. Rinnenschuß nach einem der Ansprüche 1 bis 12, **dadurch gekennzeichnet, daß** der Bodenschenkel (11) und der Deckschenkel (12) etwa auf einer Vertikallinie enden, wobei vorzugsweise der Bodenschenkel (11) des Walzprofils (10) in einer annähernd L-förmigen, einen Auflagefuß auf dem Liegenden bildenden Schenkelverdickung (35) endet.

14. Rinnenschuß nach einem der Ansprüche 1 bis 13, **dadurch gekennzeichnet, daß** zwei parallel nebeneinander angeordnete und eine Öffnung (49) zwischen sich freilassende Blechstreifen (40A, 40B) das Zwischenblech bilden.

15. Rinnenschuß nach einem der Ansprüche 1 bis 14, **dadurch gekennzeichnet, daß** der Wechseltrog (4) an den im wesentlichen T-förmigen Seitenprofilen (5) einen Horizontalsteg (6) aufweist, der mit dem Deckschenkel (12) des Walzprofils (10) über vorzugsweise eine einzige durchgehende Längsschweißnaht (41; 42) als Arretiermittel für den Wechseltrog (4) verschweißt ist.

16. Rinnenschuß nach einem der Ansprüche 1 bis 14, **dadurch gekennzeichnet, daß** der Wechseltrog L-förmige Seitenprofile mit Vertikalschenkel und Horizontalschenkel aufweist, wobei im Montagezustand der Wechseltrog über vorzugsweise eine einzige durchgehende Längsschweißnaht am Spalt zwischen Seitenprofil und Walzprofil als Arretiermittel für den Wechseltrog verschweißt ist und weiter vorzugsweise die Horizontalschenkel jeweils bündig mit dem zugehörigen Deckschenkel des Walzprofils abschließen.

17. Rinnenschuß nach Anspruch 15 oder 16, **dadurch gekennzeichnet, daß** zur Demontage des Wechseltrogs (4) die Längsschweißnähte (41; 42) vorzugsweise maschinell aufgetrennt werden.

18. Rinnenschuß nach einem der Ansprüche 1 bis 17, **dadurch gekennzeichnet, daß** die das Zwischenblech bildenden Blechstreifen (40A, 40B) und/oder der Förderboden (8) rinnenschußendseitig mit durch Brennschneiden hergestellten, bogenförmigen Rändern (47, 48; 8A, 8B) versehen sind, wobei das Wölbungsprofil des einen Randes (47; 8A) komplementär zum Wölbungsprofil des anderen Randes (48; 8B) ausgebildet ist.

19. Rinnenschuß nach einem der Ansprüche 1 bis 18, **dadurch gekennzeichnet, daß** der Wechseltrog (304) als Inspektionstrog ausgebildet ist und vorzugsweise aus drei identisch zueinander ausgeführten Trogabschnitten (304A, 304B) mit jeweils einem Förderbodenabschnitt (308) und zwei im wesentlichen L-förmigen oder T-förmigen Seitenprofilabschnitten (305) besteht, wobei vorzugsweise bei den beiden äußeren Trogabschnitten (304A) die Horizontalschenkel mit den Deckschenkeln oder die Außenstirnkanten der Horizontalschenkel (306) der Seitenprofilabschnitte (305) mit der Oberseite der Deckschenkel über Längsschweißnähte verschweißt sind und der mittlere Trogabschnitt (304B) mittels lösbarer Trogbefestigungsmittel an den beiden anderen Trogabschnitten (304A) und/oder an den die Seitenwangen bildenden Walzprofilen (10; 110; 210) arretiert ist, wobei vorzugsweise die Förderbodenabschnitte (308) aller Trogabschnitte (304A, 304B) trogendseitig mit vorzugsweise durch Brennschneiden hergestellten gewölbten Rändern (308A, 308B) versehen sind, wobei das Wölbungsprofil des einen Randes (308A) komplementär zum Wölbungsprofil des anderen Randes (308B) ausgebildet ist.

20. Rinnenschuß nach einem der Ansprüche 14 bis 19, **dadurch gekennzeichnet, daß** einer der Blechstreifen (40A) am Rinnenschußende über beide Walzprofile (10) hinausragt und der andere Blechstreifen (40B) gegenüber dem Rinnenschußende zurückversetzt angeordnet ist.

21. Rinnenschuß nach einem der Ansprüche 1 bis 20, **dadurch gekennzeichnet, daß** die Knebeltaschen (60) an einem Rinnenschußende über die Walzprofile (10) hinausragen und am anderen Rinnenschußende zurückversetzt an den Walzprofilen (10) angeschweißt sind und/oder bei einem Strebförderer zwischen der Stirnkante (34; 134) des Bodenleistenabschnitts oder des Bodenschenkels und der Unterkante der Außenstirnfläche (28) des Deckschenkels (12) ein abgewinkeltes Leitblech (53; 153) als statische Laderampe angeschweißt ist.

22. Rinnenschuß nach einem der Ansprüche 1 bis 21, **dadurch gekennzeichnet, daß** der vorzugsweise parallele Versatz des oberen Zwischenschenkelabschnitts (16) zum unteren Zwischenschenkelabschnitt (15) größer ist als die Wandstärke des Vertikalschenkels der Seitenprofile und/oder sich die Öffnungsweite der Walzprofile (10; 110) zwischen dem Deckschenkel (12; 112) und dem Bodenschenkel (11; 111) zum Zwischenschenkel (13; 113) hin verjüngt.

## Claims

1. A conveyor pan for underground face and gate conveyors, with a bottom pan (2; 102; 202) and a top pan (3) for the guidance of scrapers of a scraper chain, the conveyor pan having a welded frame construction (1) comprising side walls with a constant profile form over the length of the conveyor pan, the side walls being firmly fixed one to the other and having a base arm (11; 111; 211) and a top arm (12; 112; 212) as well as an intermediate arm (13) projecting upward and joining these, the pan comprising a conveyor base (8, 308) and a means (60) for joining conveyor pans, wherein the side walls being mirror-inverted arranged and the intermediate arm (13) being provided with an offset (14; 114; 214), onto which inner side at least one step (17) is formed for the support and welding on of at least one intermediate plate (40A; 40B) for stiffening the side walls to the frame construction (1), and wherein the side walls consist of single part rolled profiles (10; 110; 210) with a non-symmetrical profile form, **characterised in that** the rolled profiles comprise a base arm (11; 111; 211) and a top arm (12; 112; 212) both angled outwards, whereby the upper intermediate arm section (16; 216) above the offset (14; 114; 214) is displaced outwards compared to the lower intermediate arm section (15; 215) below the offset (14; 114; 214).

2. A conveyor pan according to claim 1 or 2, **characterised in that** the intermediate arm (13) of the rolled profile (10) is provided with a second step (18) to support the conveyor base (8) whereby preferably the upper top surface (19) of the offset (14) forms the second step.

3. A conveyor pan according to claim 1 or 2, **characterised in that** the upper intermediate arm section (16; 216) is displaced outwards compared to the lower intermediate arm section (15; 215) by more than the wall thickness (W) of the intermediate arm sections (15, 16; 215, 216).

4. A conveyor pan according to one of claims 1 to 3, **characterised in that** the inner side (36; 236) of the lower intermediate arm section of the rolled profile (10; 110; 210) below the lower step forms the side walls of the bottom pan (2; 102; 202) and/or the upper intermediate arm section (16; 216) above the step and the offset limits on its inside a mounting for an exchangeable tray as a top pan, in which preferably the exchangeable tray (4) comprises two rolled essentially L-shaped or T-shaped side profiles (5), which are matched to the profile shape of the scrapers, and a conveyor base (8) welded to these side profiles (5).

5. A conveyor pan according to one of the claims 1 to 4, **characterised in that** the wall thickness (W) of the lower intermediate arm section (15; 215) is essentially the same as that of the upper intermediate arm section (16; 216) and is smaller than the wall thickness (W₂) of the base arm (11; 111; 211) and/or of the top arm (12; 112; 212) and/or that the lower intermediate arm section (15; 215) extends as a straight wall section between the base arm and the offset.

6. A conveyor pan according to one of the claims 1 to 5, **characterised in that** the rolled profile (10; 110; 210) is provided in the region of the offset with a material accumulation (20; 220) stiffening the step/s and/or immediately above the offset (14; 114; 214) the wall has the least wall thickness (W₁).

7. A conveyor pan according to one of the claims 1 to 6, **characterised in that** the top arm (12; 112; 212) of the rolled profile (10; 110; 210) is angled at a right angle to the upper intermediate arm section (16; 116; 216) and/or a web is formed on the inside (22) of the upper intermediate arm section at a height of the top arm.

8. A conveyor pan according to one of the claims 1 to 7, **characterised in that** the lower intermediate arm section (15) and the base arm (15) form and border a recess (31) for positive support and acceptance of corresponding swells (54';60') on a means (60) for connecting the conveyor pans and/or for a connecting bracket (54) for the advancing beam.

9. A conveyor pan according to one of the claims 1 to 8, **characterised in that** the intermediate arm (13; 113; 213) is provided on its outer side in the region of the offset with an incline between 45[deg.] or 60[deg.]or an incline between this values and/or in which the rolled profile has a nose (37) positioned on the inside (36) of the lower intermediate arm section (15) preferably at the height of the bottom arm (11) to support and to weld on the base sheet (44) which forms the lower base of the bottom pan.

10. A conveyor pan according to one of the claims 1 to 9, **characterised in that** edge rails (45; 145; 245) of the base sheet (44; 144; 244) of the bottom pan are angled to correspond with the profile of the scraper of the scraper chain and/or wedged shaped stiffening sheets (172; 272) are welded on below the base sheet (144; 244) and onto the rolled profile for the additional or exclusive support of the bottom pan base (144; 244).

11. A conveyor pan according to one of the claims 1 to 10, **characterised in that** the base arm (11; 111; 211) is angled relative to the lower intermediate arm section (15;115; 215) by more than 90°.

12. A conveyor pan according to one of the claims 1 to 11, **characterised in that** the base arm (111; 211) extends outwards beyond the top arm (112; 212) and passes in a single piece into a base rail section (171; 271), in which preferably the base arm (111; 211) ends via a step displacement (170) or a step (282) into the base rail section (171; 271).

13. A conveyor pan according to one of the claims 1 to 12, **characterised in that** the base arm (11) and the top arm (12) end on a substantially vertical line, in which preferably the base arm (11) of the rolled profile (10) ends in an almost L-shaped thickening of the arm forming an abutment foot (35) on the ground surface.

14. A conveyor pan according to one of the claims 1 to 13, **characterised in that** two parallel strips of metal sheet (40A, 40B) arranged alongside each other allow a free opening (49) between them and form the intermediate sheet.

15. A conveyor pan according to one of the claims 1 to 14, **characterised in that** the basically T-shaped side profiles (5) of the exchangeable tray (4) are provided with a horizontal web(6) which is welded to the top arm (12) of the rolled profile (10) of the conveyor pan via a preferably single continuous long welded joint (41;42) as a locking device for the exchangeable tray.

16. A conveyor pan according to one of the claims 1 to 14, **characterised in that** the exchangeable tray has L-shaped side profiles with vertical arms and horizontal arms which are welded in the assembled state of the exchangeable tray via a single continuous long welded joint to the gap between the side profile and the rolled profile as locking device for the exchangeable tray and furthermore preferably each horizontal arm is flush with its corresponding top arm of the rolled profile.

17. A conveyor pan according to one of the claims 15 or 16, **characterised in that** for the removal of the exchangeable tray (4) the long welded joints (41; 42) are preferably separated by machine.

18. A conveyor pan according to one of the claims 1 to 17, **characterised in that** the metal strips (40A; 40B) forming the intermediate sheet and/or the conveyor base are provided at their ends with curved shaped edges (47, 48; 8A, 8B) produced by flame cutting, whereby the curved profile of one edge (47; 8A) is formed complementary to the curved profile of the other edge (48; 8B).

19. A conveyor pan according to one of the claims 1 to 18, **characterised in that** the exchangeable tray (304) is formed as an inspection tray comprises three identically constructed tray sections (304A; 304B) each having a conveyor base section (308) and two essentially L- or T-shaped side profile sections (305), whereby at the outer tray sections (304A) the horizontal arms of the side profile sections are welded to the upper side of the top arm of the rolled profile using long welded joints and a centre tray section (304B) is retained on the two other tray sections (304A) and/or on the rolled profiles (10; 110; 210) forming the side walls, in which preferably the conveyor base sections (308) of all the tray sections (304A, 304B) are provided with preferably flame cut curved edges, whereby the curve of the profile of one edge (308A) is complementary in form to that of the other edge (308B).

20. A conveyor pan according to one of the claims 14 to 19, **characterised in that** one of the metal strips (40A) on the end of the conveyor pan extends out over both rolled profiles (10) and the other strip (40B) is arranged set back from the end of the conveyor pan.

21. A conveyor pan according to one of the claims 1 to 20, **characterised in that** the toggle pockets (60) extend out over the rolled profiles (10) at one end of the conveyor pan and at the other end of the conveyor pan are arranged to be displaced backwards and are welded with the toggle pockets (60) and/or an angled guide plate (53; 153) is welded between end edges (34; 134) of the base rail section as a static loading ramp.

22. A conveyor pan according to one of the claims 1 to 21, **characterised in that** a preferential parallel displacement of the upper intermediate arm section (16) from the lower intermediate arm section (15) is greater than the wall thickness of the vertical arm of the side profile and/or the width of the opening of the rolled profile (10; 110) between the top arm (12; 112) and the bottom arm (11; 111) tapers towards the intermediate arm (13; 113).

## Revendications

1. Couloir pour des convoyeurs de taille et d'entrée souterrains avec un brin inférieur (2 ; 102 ; 202) et un brin supérieur pour le guidage des raclettes d'une chaîne à raclettes, avec une construction de cadre (1) soudée , présentant des joues latérales reliées l'une à l'autre de façon fixe, comportant une branche de fond (11 ; 111 ; 211) et une branche de plafond (12 ; 112 ; 212) ainsi qu'une branche intermédiaire (13) en saillie reliant la branche de fond et la branche de plafond avec une forme profilée constante sur la longueur de couloir, avec un fond de convoyeur (8, 308) et des moyens de liaison de couloir (60) ; les joues latérales étant disposées de façon inversée et la branche intermédiaire étant pourvue d'un coude (14 ; 114 ; 214), sur lequel coude est formé du côté intérieur au moins un gradin (17) pour le support et le soudage d'au moins une tôle intermédiaire (40 A ; 40B) rendant rigide les joues latérales de la construction de cadre (1), où les joues latérales sont composées de laminés solidaires (10 ; 110 ; 210) avec une forme profilée asymétrique, **caractérisé en ce que** les laminés comportent une branche de plafond (12 ; 112 ; 212) ainsi qu'une branche de fond (11 ; 111 ; 211) qui forment un angle vers l'extérieur, où le tronçon supérieur (16 ; 216) de la branche intermédiaire est décalé au dessus du coude (14 ; 114 ; 214) par rapport au tronçon inférieur (15 ; 215) de la branche intermédiaire .

2. Couloir selon la revendication 1, **caractérisé en ce que** la branche intermédiaire (13) du laminé (10) est pourvue d'un deuxième gradin (18) pour supporter le fond de transport (8), où la surface de plafond supérieure (19) du coude (14) forme de préférence le deuxième gradin.

3. Couloir selon la revendication 1 ou 2, **caractérisé en ce que** le tronçon supérieur (16 ; 216) de la branche intermédiaire est décalé vers l'extérieur de plus d'une épaisseur de paroi (W) des tronçons (15, 16 ; 215, 216) par rapport au tronçon inférieur (15 ; 215) de la branche intermédiaire.

4. Couloir selon une des revendications précédentes 1 à 3, **caractérisé en ce que** le tronçon inférieur de la branche intermédiaire du profilé (10 ; 110 ; 210) forme en dessous du gradin (17), avec son côté intérieur (36 ; 236), les parois latérales du brin inférieur (2 ; 102 ; 202) et / ou le tronçon supérieur (16 ; 216) de la branche intermédiaire limite en tant que brin supérieur, une réception pour un bac d'échange (4 ; 104 ; 204) avec son côté intérieur, au dessus du gradin et du coude, où le bac d'échange (4) est constitué de préférence de profilés latéraux (5) laminés , essentiellement en forme de L ou en forme de T et adaptés de préférence à la forme en profil des raclettes, ainsi que d'un fond de transport (8) soudé avec lesdits profilés latéraux.

5. Couloir selon une des revendications 1 à 4, **caractérisé en ce que** l'épaisseur de paroi (W) du tronçon inférieur (15 ; 215) de la branche intermédiaire est essentiellement identique à celle du tronçon supérieur (16 ; 216) de la branche intermédiaire et est inférieur à l'épaisseur de la paroi (W2) de la branche de fond (11 ; 111 ; 211) et/ou de la branche de plafond (12 ; 112 ; 212) et / ou **en ce que** le tronçon inférieur (15 ; 215) de la branche intermédiaire s'étend en tant que tronçon droit de paroi entre la branche de fond et le coude.

6. Couloir selon une des revendications 1 à 5, **caractérisé en ce que** le laminé (10 ; 110 ; 210) est pourvu dans la zone du coude (14 ; 114 ; 214) d'un entassement de matériaux (20 ; 220) renforçant le / les gradin (s) et / ou présente directement au dessus du coude (14 ; 114 ; 214) l'épaisseur de paroi (W1) la plus mince.

7. Couloir selon une des revendications 1 à 6, **caractérisé en ce que** la branche de plafond (12 ; 112 ; 212) du laminé (10 ; 110 ; 210) forme un angle droit par rapport au tronçon supérieur (16 ; 116 ; 216) de la banche intermédiaire et / ou est formée d'une nervure (23) sur le côté intérieur (22) du tronçon supérieur de la branche intermédiaire à hauteur de la branche de plafond.

8. Couloir selon une des revendications 1 à 7, **caractérisé en ce que** le tronçon inférieur (15) de la branche intermédiaire et la branche de fond (11) forment et limitent pour la passerelle un enfoncement (31) pour supporter et réceptionner la forme complémentaire des bombements correspondants (54' ; 60') sur les moyens de liaison (60) de couloir et / ou sur une console de raccordement (54).

9. Couloir selon une des revendications 1 à 8, **caractérisé en ce que** la branche intermédiaire (13 ; 113 ; 213) est pourvue sur le côté extérieur dans la zone du coude (14 ; 14 ; 214) d'une inclinaison de 45° ou 60° ou d'une valeur intermédiaire et / ou un nez (37) se trouve sur le côté intérieur (36) du tronçon inférieur (15) de la branche intermédiaire , de préférence à hauteur de la branche de fond (11) pour le support et le soudage d'une tôle de fond (44) formant le fond du brin inférieur.

10. Couloir selon une des revendications 1 à 9, **caractérisé en ce que** la tôle de fond (44 ; 144 ; 244) du fond du brin inférieur forme un angle selon le profilage des raclettes de la chaîne à raclettes et / ou sont soudés sous la tôle de fond (144 ; 244) et sur le laminé (110 ; 210) des tôles de renforcement (172 ; 272) en forme de cale pour supporter seul ou de façon supplémentaire le fond du brin inférieur (144 ; 244).

11. Couloir selon une des revendications 1 à 10, **caractérisé en ce que** la branche de fond (11 ; 111 ; 211) forme un angle de plus de 90° par rapport au tronçon inférieur (15 ; 115 ; 215) de la branche intermédiaire.

12. Couloir selon une des revendications 1 à 11, **caractérisé en ce que** la branche de fond (111 ; 211) fait saillie vers l'extérieur au dessus de la branche de plafond (112 ; 212) et fusionne de façon solidaire avec le tronçon de la baguette de fond (171 ; 271), où la branche de fond (111 ; 211) termine via une décalage de gradin (170) ou un gradin (282) dans le tronçon (171 ; 271) de la baguette de fond.

13. Couloir selon une des revendications 1 à 12, **caractérisé en ce que** la branche de fond (11) et la branche de plafond (12) se termine à peu près sur une ligne verticale, où la branche de fond (11) du profilé (10) se termine de préférence dans un épaississement de branche (35) à peu près en forme de L, formant un pied d'appui sur la couche rocheuse inférieure.

14. Couloir selon une des revendications 1 à 13, **caractérisé en ce que** deux bandes de tôle (40A, 40B) parallèles, disposées l'une à côté de l'autre laissent libre entre elles une ouverture (49) formant la tôle intermédiaire.

15. Couloir selon une des revendications 1 à 14, **caractérisé en ce que** le bac d'échange (4) présente une traverse de Couloire horizontale (6) sur les profilés latéraux (5) essentiellement en forme de T , laquelle traverse est soudée an tant que moyen d'arrêt avec la branche de plafond (12) du laminé (10) au moyen, de préférence, d'une seule soudure longitudinale (41 ; 42).

16. Couloir selon une des revendications 1 à 14, **caractérisé en ce que** le bac d'échange comporte des profilé latéraux en forme de L avec des branches verticales et des branches horizontales, où dans l'état de montage le bac d'échange est soudé de préférence au moyen d'une seule soudure longitudinale continue en tant que moyen d'arrêt pour le bac d'échange sur la fente entre le profilé latérale et le laminé et où en plus les branches horizontales se terminent, à chaque fois de préférence à fleur avec la branche de plafond associée du laminé.

17. Couloir selon la revendication 15 ou 16, **caractérisé en ce que** les soudures longitudinales (41 ; 42) sont, de préférence, séparées mécaniquement pour démonter le bac d'échange (4).

18. Couloir selon une des revendications 1 à 17, **caractérisé en ce que** les bandes de tôle (40A, 40B) formant la tôle intermédiaire et / ou le fond de transport (8) sont pourvues du côté de l'extrémité du couloir de bords (47, 48 ; 8A, 8B) arqués formés au moyen de découpage au chalumeau ; le profil d'un des bords (47, 8A) étant formé de façon complémentaire par rapport au profil de l'autre bord (48, 8B).

19. Couloir selon une des revendications 1 à 18, **caractérisé en ce que** le bac d'échange (304) est réalisé en tant que bac d'inspection et est constitué, de préférence, de trois tronçons de bac (304A, 304B) réalisés de façon identique l'un par rapport à l'autre avec à chaque fois un tronçon de fond de transport (308) et deux tronçons de profilés latéraux essentiellement en forme de L ou de T ; les branches horizontales avec les branches de plafond ou les bords frontaux extérieurs des branches horizontales (306) des tronçons de profilés latéraux (305), de préférence pour les deux tronçons de bac (304A) extérieurs, étant soudées avec le côté supérieur des branches de plafond et le tronçon médian de bac (304B) étant arrêté à l'aide de moyens de fixation de bac mobile sur les deux autres tronçons de bac (304A) et / ou sur les laminés (10 ; 110 ; 210) formant les joues latérales ; les tronçons de fond de transport (308 de tous les tronçons de bac (304A ; 304B) étant pourvus, de préférence, du côté de l'extrémité du bac de bords (308A, 308B) bombés fabriqués, de préférence, par un découpage au chalumeau ; le profilé d'un des bords (308A) étant complémentaire au profilé de l'autre bord (308B).

20. Couloir selon une des revendications 14 à 19, **caractérisé en ce qu'**une des bandes de tôle (40A) fait saillie à l'extrémité de couloir au dessus des deux laminés (10) et **en ce que** l'autre bande de tôle (40B) est décalée vers l'arrière par rapport à l'extrémité de couloir.

21. Couloir selon une des revendications 1 à 20, **caractérisé en ce que** les dispositifs de blocage (60) font saillis à une extrémité de couloir au dessus des laminés (10) et sont soudés à l'autre extrémité de couloir de façon décalée vers l'arrière sur les laminés (10) et / ou une tôle de guidage (53 ; 153) en tant que rampe de chargement statique formant un angle (34 ; 134) est soudée pour un convoyeur de taille entre le bord frontal (34 ; 134) du tronçon de baguette de fond ou de la branche de fond et le bord inférieur de la surface frontal extérieure (28) de la branche de plafond.

22. Couloir selon une des revendications 1 à 21, **caractérisé en ce que** le décalage de préférence parallèle du tronçon de la branche intermédiaire (16) par rapport au tronçon inférieur de la branche intermédiaire (15) est plus grande que l'épaisseur de la paroi de la branche verticale des profilés latéraux et / ou **en ce que** la largeur d'ouverture des laminés (10 ; 110) se rétrécit en direction de la branche intermédiaire (13 ; 113) entre la branche de plafond (12 ; 112) et la branche de fond (11 ; 111).
